# EUROPÄISCHE PATENTSCHRIFT

(11) **EP 2 065 427 B1**
(45) Veröffentlichungstag und Bekanntmachung des Hinweises auf die Patenterteilung: **02.06.2010**
(21) Anmeldenummer: 08165451.9
(22) Anmeldetag: 30.09.2008
(51) Int. Cl.: C08G 65/30

(54) **Verfahren zur Alkoxylierung mit DMC-Katalysatoren im Schlaufenreaktor mit Strahlsauger**
Method for alkoxylation with DMC catalysts in loop-type bubble column with eductor
Procédé d'alkoxylation à l'aide de catalyseurs DMC dans un réacteur à écoulement en boucle avec aspiration des rayons

(30) Priorität: 28.11.2007 DE 102007057147
(43) Veröffentlichungstag der Anmeldung: 03.06.2009
(73) Patentinhaber: Evonik Goldschmidt GmbH, 45127 Essen (DE)
(72) Erfinder: Sellmann, Andreas, 40885 Ratingen (DE); Zellmer, Volker, Dr., 46240 Bottrop (DE)
(74) Vertreter: Lang, Arne

(56) Entgegenhaltungen:
- EP-A- 0 419 419
- WO-A-01/62826
- DE-A1- 19 854 637

## Beschreibung

Die Erfindung betrifft ein Verfahren zur Alkoxylierung in Gegenwart von Doppel-Metall-Cyanid-Katalysatoren (DMC-Katalysatoren) in einem Schlaufenreaktor mit Strahlsauger (Strahldüse). Gegenstand der Erfindung sind Verfahren gemäß den anhängenden Ansprüchen 1-8.

Doppel-Metall-Cyanid-Katalysatoren (DMC-Katalysatoren) und ihr Einsatz zur Herstellung von Polyether-Polyolen sind seit längerer Zeit bekannt. Insbesondere die Dokumente EP 0 868 468, EP 0 879 259, EP 0 981 407, EP 0 971 970, EP 1 012 203, EP 1 017 738, EP 1 173 498, EP 1 254 714, EP 1 258 291, EP 1 382 629, EP 1 577 334 und WO 05/042616 sowie die in diesen Dokumenten zitierten Schriften beschreiben ausführlich die Herstellung von DMC-Katalysatoren sowie die Verwendung dieser, insbesondere zur Herstellung von Polyethern durch Alkoxylierung. Der Inhalt der genannten Dokumente soll vollumfänglich zum Offenbarungsgehalt der vorliegenden Erfindung gehören.

Neben einer hohen Reaktivität weist der DMC-Katalysator bei Alkoxylierungsreaktionen durch seine hohe Substrat-Selektivität den Vorteil auf, dass sehr enge Molmassenverteilungen erreicht werden können und dass die Bildung von Nebenreaktionen stark reduziert wird.

Der DMC-Katalysator weist aber auch gewisse Nachteile auf, die die Verwendung der mittels DMC-Katalyse hergestellten Polyether bei bestimmten Anwendungen verhindern.

Die Nachteile von DMC-Katalysatoren bei Alkoxylierungsprozessen sind insbesondere:
1. DMC-Katalysatoren haben die ungünstige Eigenschaft durch bestimmte Stoffe, wie z. B. Starter mit niedriger Molmasse, inhibiert zu werden (EP 1 017 738). Es kann also in der Regel nicht - wie bei einer herkömmlichen (z.B. alkalischen) Katalyse - ein Gemisch aus niedermolekularem Alkohol (als Startverbindung für die Alkoxylierung) und Katalysator vorgelegt werden. Bei DMC-katalysierten Alkoxylierungsprozessen wird daher die Anlagerungsreaktion mit einer im Reaktor vorgelegten Substanz gestartet, in der der Katalysator suspendiert wird. Das Suspendiermittel kann entweder ein Polyether sein oder die Startverbindung (z.B. Alkohol), an das Alkylenoxid angelagert werden soll, oder ein Gemisch aus Beiden. Vorzugsweise ist das Suspendiermittel ein Polyether. Besonders bevorzugt wird als Suspendiermittel ein Polyether eingesetzt, der noch DMC-katalysiert ist. Die Menge an Startverbindung (z.B. Alkohol), die ggf. zur Erreichung der angestrebten Molmasse notwendig ist, wird dann im weiteren Verlauf zusammen mit Alkylenoxid parallel dosiert. Dies führt zu einer sehr breiten und sehr unregelmäßigen Molmassenverteilung während der Phase der parallelen Zugabe von Startverbindung (z.B. Alkohol) und Alkylenoxid. Das besondere an DMC-Katalysatoren ist jedoch, dass sich aufgrund der hohen Selektivität nach Beendigung der gleichzeitigen Zugabe von Alkylenoxid und Startverbindung (z.B. Alkohol) bei der darauf folgenden ausschließlichen Zugabe von Alkylenoxid die Molmassenverteilung wieder sehr stark verengt. Dies kann allerdings für bestimmte Anwendungen nachteilig sein.
2. DMC-Katalysatoren müssen üblicherweise aktiviert bzw. initialisiert werden. Die Aktivierung kann z. B. dadurch erfolgen, dass leicht flüchtige Komponenten aus dem Katalysator destillativ, ggf. unter Anlegen eines Vakuums, entfernt werden. Die Initialisierung des Katalysators wird durchgeführt, indem eine möglichst geringe Menge Alkylenoxid zum Gemisch aus dem ggf. wie beschrieben vorbehandelten Katalysator und Suspendiermittel gegeben wird. Das "Anspringen" der Reaktion kann im Fall von bei Reaktionstemperatur gasförmigen Alkylenoxiden durch Druckabfall detektiert werden.
3. DMC-Katalysatoren neigen aufgrund ihrer hohen Selektivität dazu, homologe Reihen zu bilden, d.h., dass sich bei gleichzeitiger Anlagerung verschiedener Alkylenoxidarten bevorzugt gleichartige Ketten bilden. Beispielsweise bei gleichzeitiger Anlagerung von Ethylenoxid und Propylenoxid lagert sich Ethylenoxid bevorzugt an ein Molekül an, dessen reaktive Endgruppe durch die Anlagerung von Ethylenoxid entstanden ist. Propylenoxid lagert sich dabei bevorzugt an eine durch Propylenoxidanlagerung entstandene Endgruppe an.
   Es ist deshalb nicht möglich, durch ein statistisches oder schubweises Angebot verschiedener Alkylenoxidarten einen in seiner Alkylenoxid-Sequenz beliebig wählbaren Molekülstrukturaufbau einhergehend mit einer wählbaren Molekulargewichtsverteilung einzustellen. Besonders ausgeprägt ist dieses Phänomen bei niedermolekularen Alkylenoxiden.

Die Aufgabe der vorliegenden Erfindung bestand deshalb in der Bereitstellung eines alternativen Alkoxylierungsverfahrens, welches einen oder mehrere der oben genannten Nachteile vermeidet.

Überraschenderweise wurde gefunden, dass die Molmassenverteilung, die üblicherweise bei mit DMC-Katalysatoren katalysierten Alkoxylierungen sehr eng ist, im als Reaktionsmischer verwendeten Strahlsauger eines Schlaufenreaktors durch die gleichzeitige Zugabe von Startverbindung (z.B. Alkohol) und Alkylenoxid gesteuert werden kann und/oder dass bei der blockweisen oder statistischen Anlagerung von verschiedenartigen Alkylenoxidarten durch eine abwechselnde Zugabe der verschiedenen Alkylenoxide zum Reaktionsgemisch durch die schnelle bzw. gute Durchmischung des zugegebenen Alkylenoxids eine gesteuerte Anlagerung der verschiedenen Alkylenoxide erreicht werden kann, wodurch auch bei der Verwendung von DMC-Katalysatoren ein gewünschter Molekülstrukturaufbau möglich ist.

Gegenstand der vorliegenden Erfindung ist deshalb ein Verfahren gemäß Anspruch 1 zur Herstellung von Alkoxylierungsprodukten der Formel (I)

R¹- (CHR²CHR³-O)ₙ-H (I)

mit
n = 1 bis 12.000,
R¹ = mindestens ein Kohlenstoffatom aufweisender Rest,
R² und R³ unabhängig voneinander H oder ein Kohlenwasserstoffrest, wobei die mit dem Index n gekennzeichneten Einheiten gleich oder unterschiedlich sein können (die Reste R² und R³ in den unterschiedlichen Einheiten n also gleich oder unterschiedlich sein können),
durch Alkoxylierung einer Startverbindung, die den Rest R¹ aufweist,
in Gegenwart eines Doppel-Metall-Cyanid-Katalysators (DMC-Katalysators) in einem Schlaufenreaktor, welches dadurch gekennzeichnet ist, dass die Alkoxylierung in einem Schlaufenreaktor durchgeführt wird, der über eine Strahlsauger-Mischdüse verfügt, in der dem umgewälzten Reaktionsgemisch alle an der Reaktion beteiligten Stoffe und gegebenenfalls Hilfsstoffe, die nicht an der Reaktion beteiligt sind, wie z. B. Lösungsmittel, zugemischt werden, wobei ein Alkylenoxid oder mehrere unterschiedliche Alkylenoxide zum gleichen Zeitpunkt (statistische Anlagerung) oder zu unterschiedlichen Zeitpunkten (Blockanlagerung) über die Strahlsauger-Mischdüse dem Reaktionsgemisch zudosiert werden.

Im folgenden wird der Begriff "Polyether der Formel (I)" anstatt dem Begriff "Alkoxylierrungsprodukt der Formel (I) verwendet.

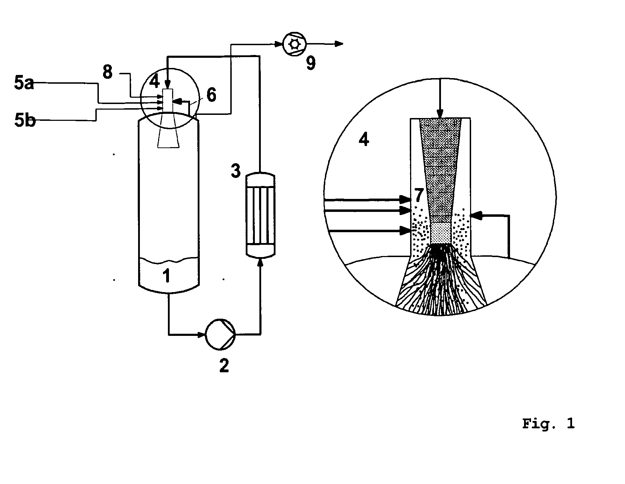

Aus dem Stand der Technik sind Schlaufenreaktoren mit Strahlsaugern bekannt, so z. B. in EP 0 419 419. Bei diesen Schlaufenreaktoren wird der flüssige Reaktorinhalt über eine nach dem Venturi-Prinzip arbeitende Strahlsauger-Mischdüse umgewälzt (eine schematische Darstellung kann Fig. 1 entnommen werden). Der Reaktorinhalt (1) wird dabei mit einer Umwälzpumpe (2) ggf. über einen Wärmetauscher (3) durch die Strahlsauger-Mischdüse (4) zurück in den Reaktor gefördert. Im Gasraum der Strahlsauger-Mischdüse (7) wird durch den Venturi-Effekt ein Unterdruck erzeugt, mit dem entweder gasförmige oder flüssige Edukte (5) oder die Gasphase des Reaktors selbst (6) angesaugt und intensiv mit der umgewälzten Flüssigkeit vermischt werden. Durch die Verdüsung der Flüssigkeit und das Ansaugen der flüssigen oder gasförmigen Komponenten kann eine sehr große Phasenaustauschfläche erzeugt werden. Solche Reaktoren werden deshalb insbesondere auch für die Durchführung von Gas-Flüssig-Reaktionen eingesetzt, die sich durch eine sehr hohe Reaktionsgeschwindigkeit auszeichnen.

Im Stand der Technik werden solche Reaktortypen für die Alkoxylierung, beispielsweise für die Ethoxylierung eingesetzt. Vorzugsweise werden solche Reaktortypen dort eingesetzt, wo nur geringe Mengen gasförmigen Ethylenoxids beispielsweise an Alkohole angelagert werden. Bei anderen Alkoxylierungsprozessen, bei denen entweder höhere Molmassen durch Anlagerung größerer Mengen Alkylenoxids erzielt werden sollen oder andere, weniger reaktive Alkylenoxide (z.B. Propylenoxid, Butylenoxid, Styroloxid u. a.) eingesetzt werden, ist die Anlagerungsrate stärker durch die Reaktionskinetik limitiert als durch den Stoffübergang. In diesen Fällen findet man noch Mengen nicht abreagierter Edukte in der Flüssigphase. In solchen Fällen kommen die Vorteile der Strahlsauger-Mischdüse im Vergleich zu konventionellen Techniken (z.B. Rührreaktor oder Schlaufenreaktor mit Verdüsung der Flüssigkeit in der Gasphase) nicht im vollen Umfang zum Tragen.

Überraschenderweise wurde gefunden, dass durch die Verwendung von DMC-Katalysatoren, diese Alkoxylierungsreaktionen, die mit herkömmlichen Katalysatoren durch eine niedrige Reaktionsgeschwindigkeit limitiert sind, zu Reaktionen führen, die durch hohe Reaktionsgeschwindigkeiten im Wesentlichen nur noch durch den Stoffübergang bestimmt sind. Auf diese Weise können die besonderen Vorzüge des Schlaufenreaktors mit Strahlsauger auch bei solchen Alkoxylierungen genutzt werden, deren Anlagerungsrate vor Verwendung des DMC-Katalysators nur durch eine langsame Reaktionsgeschwindigkeit bestimmt war.

Die Durchführung von DMC-katalysierten Alkoxylierungen in Schlaufenreaktoren mit Strahlsauger-Mischdüsen bietet also den Vorteil, alle Arten von Alkoxylierungen, bei denen spezielle Alkylenoxide und Startalkohole verwendet werden und/oder hohe Molmassen erzielt werden sollen, mit hoher Anlagerungsrate durchführen zu können. Insbesondere können solche Alkoxylierungen besonders vorteilhaft durchgeführt werden, bei denen als Alkylenoxide Propylenoxid, Butylenoxid und/oder Styroloxid eingesetzt werden.

Die erfindungsgemäße Durchführung der Alkoxylierung in Gegenwart von DMC-Katalysator in einem Schlaufenreaktor mit Strahlsauger-Mischdüse hat den Vorteil, dass die Aktivierung des Katalysators bzw. das destillative Entfernen von in Spuren enthaltenen Komponenten, die den Katalysator inhibieren könnten, besonders vorteilhaft durch "Stickstoffstripping" im Schlaufenreaktor mit Strahlsaugermischdüse durchgeführt werden kann. Dabei wird ein Mengenstrom Inertgas in die Strahlsaugermischdüse zugegeben (8) und gleichzeitig werden die flüchtigen Komponenten über eine Vakuumanlage (9) abdestilliert.

Das erfindungsgemäße Verfahren hat außerdem den Vorteil, dass die Katalysatorinitialisierung mit einer geringeren Menge Alkylenoxid als in herkömmlichen Reaktoren durchgeführt werden kann, was zum einen den Vorteil einer erhöhten Sicherheit bedeutet, da die Menge an nicht abreagiertem Edukt im Reaktor minimiert wird und zum anderen der Molekülstrukturaufbau nicht schon durch die Alkylenoxidinitialisierungsmenge beeinflusst wird.

Ein weiterer Vorteil des erfindungsgemäßen Verfahrens besteht darin, dass durch die nahezu immer konstanten Druckverhältnisse von Alkylenoxid bzw. Startverbindung zum Unterdruck im Gasraum des Strahlsaugers das Verhältnis von Alkylenoxid- und Startverbindungsmengenstrom sehr gezielt und vor allem sehr reproduzierbar geregelt werden kann. Auf diese Weise kann vermieden werden, dass bei zu schneller Zugabe von Startverbindung (z.B. Alkohol) die Reaktion durch Inhibierung des DMC-Katalysators einschläft oder bei zu schneller Zugabe von Alkylenoxid bei gegebener Mengenbilanz die Phase der anschließenden alleinigen Alkylenoxidzugabe zu kurz ist, um noch eine enge Molmassenverteilung zu erreichen.

Üblicherweise soll die Menge an Startverbindung (z.B. Alkohol) im Verhältnis zum Alkylenoxid möglichst schnell zudosiert werden, um die Phase der gleichzeitigen Zugabe möglichst kurz zu halten bzw. möglichst lange ausschließlich Alkylenoxid zuzudosieren, um eine möglichst enge Molmassenverteilung zu erzielen. Für bestimmte Verwendungen der Polyether (z.B. zur Herstellung von organomodifizierten Siloxanverbindungen) kann es jedoch vorteilhaft sein, eine bestimmte Molmassenverteilung mit bestimmten Anteilen niedermolekularer und hochmolekularer Verbindungen zu erzielen.

Damit liegt ein besonderer Vorteil der vorliegenden Erfindung, bei der die Strahlsaugermischdüse als Reaktionsmischer für die gleichzeitige Zugabe von Startverbindung (z.B. Alkohol) und Alkylenoxid verwendet wird, darin, dass mit hoher Reproduzierbarkeit die Mengenverhältnisregelung so eingestellt werden kann, dass über die Dauer der gleichzeitigen Zugabe von Startverbindung und Alkylenoxid die Breite der Molmassenverteilung bzw. der Anteil an niedermolekularen und hochmolekularen Polyethern gezielt und reproduzierbar einstellbar ist.

Die Erfindung hat insbesondere den Vorteil, dass die Molmassenverteilung reproduzierbar über die Dauer der gleichzeitigen Zugabe von Startverbindung und Alkylenoxid(-en) eingestellt werden kann. Bei jeweils gleicher Gesamtmenge der zugegebenen Startverbindung bzw. Alkylenoxid(-en) führt eine im Anschluss an die gemeinsame Zugabe durchgeführte kürzere alleinige Zugabe von Alkylenoxiden zu einer breiten Molmassenverteilung. Eine kurze gleichzeitige Zugabe von Startverbindung und Alkylenoxid und damit eine längere Zugabe von Alkylenoxid(-en) führt hingegen zu einer engeren Molmassenverteilung.

Je nach gewünschter Molmassenverteilung weist das erfindungsgemäße Verfahren entweder zunächst eine erste Phase auf, in der die Zugabe von Startverbindung und zumindest einem Alkylenoxid zeitgleich erfolgt, und dann eine dieser Phase folgenden Phase, in der eines oder mehrere Alkylenoxide und keine Startverbindung zugegeben wird, wobei die Dauer der alleinigen Zugabe variiert werden kann, oder die Zugabe von Startverbindung und zumindest einem Alkylenoxid erfolgt während der gesamten Reaktion ausschließlich zeitgleich.

Ein ganz besonderer Vorteil des erfindungsgemäßen Verfahrens liegt außerdem darin, dass durch den intensiven Stoffaustausch und die extrem kurze Kontaktzeit der Edukte in der als Reaktionsmischer fungierenden Strahlsauger-Mischdüse die Neigung des DMC-Katalysators, homologe Polyetherketten zu bilden, reduziert werden kann. Darüber hinaus ist es im beschriebenen Reaktortyp im Vergleich zu konventionellen Reaktortypen (z.B. Rührreaktor) aufgrund der besonders guten Regelbarkeit der Alkylenoxidmengenströme und der schnellen Abreaktion des zudosierten Alkylenoxids im Reaktionsmischer (Strahlsaugermischdüse) möglich, durch gezielte Zugabesequenzen für die verschiedenen Alkylenoxide die homologen Reihen, zu deren Bildung der DMC-Katalysator neigt, zu unterbrechen.

Das erfindungsgemäße Verfahren wird nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden im Rahmen der vorliegenden Erfindung Verbindungen beschrieben die verschiedene Einheiten mehrfach aufweisen können, so können diese statistisch verteilt (statistisches Oligomer) oder geordnet (Blockoligomer) in diesen Verbindungen vorkommen. Angaben zu Anzahl von Einheiten in solchen Verbindungen sind als Mittelwert, gemittelt über alle entsprechenden Verbindungen zu verstehen.

Das erfindungsgemäße Verfahren zur Herstellung von Polyethern der Formel (I)

R¹-(CHR²CHR³-O)ₙ-H (I)

mit
n = 1 bis 12.000, vorzugsweise 4 bis 800, bevorzugt 20 bis 400 und besonders bevorzugt 80 bis 200,
R¹ = ein mindestens ein Kohlenstoffatom aufweisender Rest, vorzugsweise ein organischer Rest, bevorzugt ein über ein Kohlenstoffatom oder ein Heteroatom, bevorzugt Sauerstoff oder Stickstoff angebundener organischer Rest, insbesondere ein so angebundener Kohlenwasserstoffrest, besonders bevorzugt ein so angebundener Alkyl- oder Alkenylrest, der unsubstituiert oder substituiert, insbesondere mit (weiteren) OH-Gruppen substituiert sein kann, wobei der Rest R¹ vorzugsweise 1 bis 30 C-Atome, bevorzugt 2 bis 20 und besonders bevorzugt 3 bis 10 C-Atome aufweist, und
R² und R³ unabhängig voneinander H oder ein Kohlenwasserstoffrest, wobei die mit dem Index n gekennzeichneten Einheiten gleich oder unterschiedlich sein können (die Reste R² und R³ in den unterschiedlichen Einheiten n also gleich oder unterschiedlich sein können), durch Alkoxylierung einer Startverbindung, die den Rest R¹ aufweist, in Gegenwart eines Doppel-Metall-Cyanid-Katalysators (DMC-Katalysators) in einem Schlaufenreaktor, zeichnet sich dadurch aus, dass die Alkoxylierung in einem Schlaufenreaktor durchgeführt wird, der über eine Strahlsauger-Mischdüse verfügt, in der dem umgewälzten Reaktionsgemisch alle an der Reaktion beteiligten Stoffe und gegebenenfalls Hilfsstoffe zugemischt werden, wobei ein Alkylenoxid oder mehrere unterschiedliche Alkylenoxide zum gleichen Zeitpunkt (statistische Anlagerung) oder zu unterschiedlichen Zeitpunkten (Blockanlagerung) über die Strahlsauger-Mischdüse dem Reaktionsgemisch zudosiert werden.

Vorzugsweise werden als Polyether der Formel (I) Polyether der Formel (II) 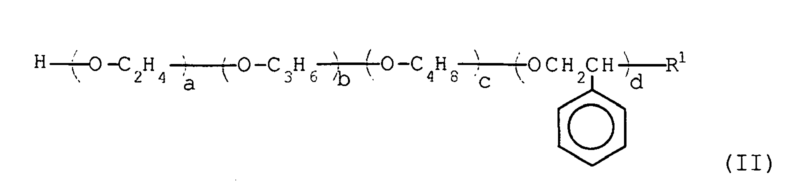 mit
- a: 0 bis 300, vorzugsweise 1 bis 200, bevorzugt 5 bis 100, besonders bevorzugt 10 bis 70 und ganz besonders bevorzugt 20 bis 50,
- b: 0 bis 300, vorzugsweise 1 bis 200, bevorzugt 5 bis 100, besonders bevorzugt 10 bis 70 und ganz besonders bevorzugt 20 bis 50,
- c: 0 bis 300, vorzugsweise 1 bis 200, bevorzugt 5 bis 100, besonders bevorzugt 10 bis 70 und ganz besonders bevorzugt 20 bis 50,
- d: 0 bis 300, vorzugsweise 1 bis 200, bevorzugt 5 bis 100, besonders bevorzugt 10 bis 70 und ganz besonders bevorzugt 20 bis 50,
- R¹: wie oben definiert, insbesondere organischer Rest, vorzugsweise Kohlenwasserstoffrest, bevorzugt Alkyl- oder Alkenylrest, der substituiert, insbesondere mit (weiteren) OH-Gruppen substituiert sein kann, mit 2 bis 30, besonders bevorzugt 2 bis 20, ganz besonders bevorzugt 3 bis 10 C-Atomen und
mit der Maßgabe dass zumindest einer, vorzugsweise zwei der Indizes a bis d ungleich null sind, durch Alkoxylierung einer Startverbindung (z.B. Alkohol), die einen organischen Rest R¹ aufweist, hergestellt.

Unter Startverbindungen werden im Rahmen der vorliegenden Erfindung Substanzen verstanden, die den Anfang (Start) des herzustellenden Polyethermoleküls bilden, das durch die Anlagerung von Alkylenoxid erhalten wird. Die in dem erfindungsgemäßen Verfahren eingesetzte Startverbindung ist vorzugsweise ausgewählt aus der Gruppe der Amine, Alkohole, Carbonsäuren, Aldehyde und Ketone, bevorzugt ausgewählt aus der Gruppe der Alkohole, Carbonsäuren, Aldehyde und Ketone. Besonders bevorzugt wird als Startverbindung ein ein- oder mehrwertiger Alkohol R¹-H (das H gehört zur OH-Gruppe des Alkohols) eingesetzt. Beispiele für mehrwertige Alkohole, die in dem erfindungsgemäßen Verfahren eingesetzt werden können, sind z.B. Ethylenglykol, Glycerin, 1,2-, 1,3- oder 1,4-Butandiol, Alkylglycoside, wie z. B. α-Methylglycosid, Sorbitol, Mannitol u.a. Als mehrwertige Alkohole werden vorzugsweise Ethylenglykol oder Glycerin eingesetzt. Beispiele für einwertige Alkohole sind alle Alkanole bis C₃₀ und andere einwertige Alkohole, wie z.B. Allylalkohol. Besonders bevorzugt werden z.B. Methanol, Butanol, Hexanol, Nonanol und Allylalkohol eingesetzt.

Das Reaktionsgemisch weist zumindest einen DMC-Katalysator, vorzugsweise fein verteilt in einem Suspendiermittel auf. Das Suspendiermittel kann entweder ein Polyether sein oder die Startverbindung (z.B. Alkohol), an die Alkylenoxid angelagert werden soll, oder ein Gemisch aus Beiden. Vorzugsweise ist das Suspendiermittel ein Polyether. Besonders bevorzugt wird als Suspendiermittel ein Polyether eingesetzt, dessen Startverbindung mit der Startverbindung, vorzugsweise dem Alkohol R¹-H identisch ist. Besonders bevorzugt ist dieser Polyether ebenfalls DMC-katalysiert hergestellt worden und kann bevorzugt noch DMC-Katalysator enthalten.

Als DMC-Katalysator können alle bekannten DMC-Katalysatoren, vorzugsweise solche, die Zink und Kobalt aufweisen, bevorzugt solche, die Zinkhexacyanocobaltat(III) aufweisen, eingesetzt werden. Vorzugsweise werden die in US 5,158,922, US 20030119663, WO 01/80994 oder in den oben genannten Schriften beschriebenen DMC-Katalysatoren eingesetzt.

Im Reaktionsgemisch beträgt die Katalysatorkonzentration vorzugsweise von > 0 bis 1.000 wppm (Gewichts-ppm), bevorzugt von > 0 bis 500 wppm, besonders bevorzugt 10 bis 250 wppm und besonders bevorzugt 30 bis 150 wppm. Wird das erfindungsgemäße Verfahren kontinuierlich durchgeführt, kann über die Strahlsauger-Mischdüse neuer Katalysator in das Reaktionsgemisch eingemischt werden.

Die erfindungsgemäße Alkoxylierung wird vorzugsweise bei einer Temperatur von 60 bis 250, bevorzugt 100 bis 180 °C und besonders bevorzugt bei einer Temperatur von 120 bis 160 °C durchgeführt. Der Druck, bei dem die Alkoxylierung durchgeführt wird, beträgt vorzugsweise 0,0002 bis 10 MPa, bevorzugt 0,0005 bis 1 MPa und besonders bevorzugt 0,001 bis 0,2 MPa absolut. Durch die Durchführung der Alkoxylierung bei Unterdruck kann die Reaktion sehr sicher durchgeführt werden, da der Reaktor mit großem Abstand zum Ansprechdruck des Sicherheitsventils betrieben werden kann. Ggf. kann die Alkoxylierung durch die Zugabe von Inertgas (z.B. Stickstoff) auch bei Überdruck durchgeführt werden.

Zum Starten der Reaktion kann es vorteilhaft sein, wenn zunächst ein Reaktionsgemisch, welches aus DMC-Katalysator in einem Suspendiermittel besteht, im Schlaufenreaktor vorgelegt wird und diesem zumindest ein Alkylenoxid, vorzugsweise nur ein Alkylenoxid über die Strahlsaugermischdüse dem Reaktionsgemisch zudosiert wird. Das molare Verhältnis von Alkylenoxid zu reaktiven Gruppen, insbesondere OH-Gruppen im Startgemisch beträgt dabei vorzugsweise von 0,1 bis 5, bevorzugt von 0,2 bis 2, besonders bevorzugt von 0,2 bis 1. Es kann vorteilhaft sein, wenn vor der Zugabe des Alkylenoxids gegebenenfalls vorhandene, die Reaktion inhibierende Stoffe aus dem Reaktionsgemisch, z.B. durch Destillation, entfernt werden.

Das erfindungsgemäße Verfahren wird vorzugsweise so durchgeführt, dass zuerst ein Polyether, der vorzugsweise mit der gewünschten Startverbindung hergestellt wurde und besonders bevorzugt mit DMC-Katalysator hergestellt wurde und diesen gegebenenfalls noch suspendiert enthält, vorgelegt wird und der DMC-Katalysator in diesem Polyether suspendiert wird. Dieses Reaktionsgemisch wird dann im Schlaufenreaktor im Kreis gepumpt. Anschließend werden durch Zugabe eines Inertgases wie z.B. Stickstoff und Anlegen von Vakuum leichtflüchtige Komponenten, die den DMC-Katalysator inhibieren können, abdestilliert. Danach wird zumindest ein Alkylenoxid, vorzugsweise nur ein Alkylenoxid als Startmenge in die Strahlsaugermischdüse dem Reaktionsgemisch zudosiert. Das molare Verhältnis von Alkylenoxid zu reaktiven Gruppen, insbesondere OH-Gruppen liegt dabei vorzugsweise im oben angegebenen Bereich.

Das Starten der Reaktion kann z. B. durch eine Drucküberwachung detektiert werden. Ein plötzlicher Abfall des Drucks im Reaktor zeigt bei gasförmigen Alkylenoxiden an, dass das Alkylenoxid eingebaut wird, die Reaktion somit gestartet und das Ende der Startphase erreicht ist.

Nach der Startphase, also nach Initialisierung der Reaktion, werden je nach angestrebter Molmasse bzw. Molmassenverteilung entweder Startverbindung und Alkylenoxid parallel oder nur noch Alkylenoxid zudosiert. Das molare Verhältnis der dosierten Alkylenoxide bezogen auf die eingesetzte Startverbindung, insbesondere bezogen auf die Anzahl der OH-Gruppen der eingesetzten Startverbindung beträgt dabei vorzugsweise 0,5 bis 10.

Die Dauer der Zugabe eines bestimmten Alkylenoxids hängt von der gewünschten Abfolge der Alkylenoxid-Einheiten im Zielmolekül ab.

Als Alkylenoxide können Verbindungen, die die allgemeine Formel (III) aufweisen, 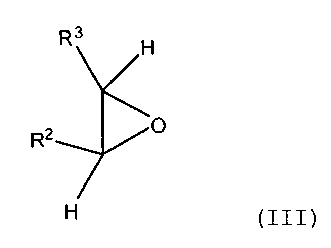 mit R² und R³ unabhängig voneinander H oder ein Kohlenwasserstoffrest, eingesetzt werden. Der Kohlenwasserstoffrest kann cycloaliphatisch sein, ist aber insbesondere ein linearer oder verzweigter Kohlenwasserstoffrest, insbesondere ein Kohlenwasserstoffrest mit 1 bis 20, bevorzugt 1 bis 6 Kohlenstoffatomen, besonders bevorzugt ein Methyl-, Ethyl- oder Phenylrest. Die Reste R² und R³ können auch Teil einer cyclischen Gruppe sein, R² und R³ bilden dann einen zweiwertigen Rest. Die Kohlenwasserstoffreste R² und R³ können ihrerseits funktionelle Gruppen wie Halogene, Hydroxylgruppen und Glycdyloxypropylgruppen tragen. Zu solchen Alkylenoxiden gehören Epichlorhydrin, 2,3-Epoxy-1-propanol ebenso wie polyfunktionelle Epoxidverbindungen wie 1,2-Ethyl-, 1,4-Butyl- und 1,6-Hexyldiglycidylether. Vorzugsweise ist zumindest einer der beiden Reste R² oder R³ ein Wasserstoff. Besonders bevorzugt werden als Alkylenoxide Ethylenoxid, Propylenoxid, 1,2- oder 2,3-Butylenoxid, Isobutylenoxid, 1,2-Dodecenoxid, Styroloxid, Cyclohexenoxid, Vinylcyclohexenoxid und/oder Styroloxid eingesetzt.

Als Alkylenoxide können auch Glycidylverbindungen, wie Glycidylether oder Glycidylester, deren mindestens eine Glycidyloxypropyl-Gruppe über eine an der Ether- oder Esterfunktion an einen linearen oder verzweigten Alkylrest von 1 bis 24 Kohlenstoffatomen, einen aromatischen oder cycloaliphatischen Rest gebunden ist, eingesetzt werden. Zu dieser Klasse von Verbindungen gehören zum Beispiel Allyl-, Butyl-, 2-Ethylhexyl-, Cyclohexyl-, Benzyl-, C₁₂/C₁₄-Fettalkohol-, Phenyl-, p-tert.-Butylphenyl- und o-Kresylglycidylether. Bevorzugt eingesetzte Glycidylester sind zum Beispiel Glycidylmethacrylat, Glycidylacrylat und Neodecansäureglycidylester.

Zum Erhalt der bevorzugten Verbindungen der Formel (II) werden im Mittel bevorzugt 0 bis 300 mol, vorzugsweise 1 bis 200 mol, bevorzugt 5 bis 100 mol, besonders bevorzugt 10 bis 70 mol und ganz besonders bevorzugt 20 bis 50 mol von Verbindungen der Formel (III) mit R² und R³ = H, und/oder 0 bis 300 mol, vorzugsweise 1 bis 200 mol, bevorzugt 5 bis 100 mol, besonders bevorzugt 10 bis 70 mol und ganz besonders bevorzugt 20 bis 50 mol von Verbindungen der Formel (III) mit R² - Methyl und R³ = H, und/oder 0 bis 300 mol, vorzugsweise 1 bis 200 mol, bevorzugt 5 bis 100 mol, besonders bevorzugt 10 bis 70 mol und ganz besonders bevorzugt 20 bis 50 mol von Verbindungen der Formel (III) mit R² = Ethyl und R³ = H, und/oder 0 bis 300 mol, vorzugsweise 1 bis 200 mol, bevorzugt 5 bis 100 mol, besonders bevorzugt 10 bis 70 mol und ganz besonders bevorzugt 20 bis 50 mol von Verbindungen der Formel (III) mit R² = Phenyl und R³ = H pro mol Startverbindung oder pro in einem mol der Startverbindung enthaltenen reaktiven Gruppen, insbesondere OH-Gruppen im erfindungsgemäßen Verfahren umgesetzt.

Es kann vorteilhaft sein, wenn in dem erfindungsgemäßen Verfahren über die Strahlsauger-Mischdüse als Hilfsstoff ein Inertgas dem Reaktionsgemisch zugemischt wird und in einer in den Schlaufenreaktor integrierten Vakuumanlage leichter flüchtige Komponenten als der Polyether durch Anlegen eines Unterdrucks aus dem Reaktionsgemisch entfernt werden. Auf diese einfache Weise können dem Reaktionsgemisch Stoffe, die den Katalysator inhibieren können, wie z. B. niedere Alkohole oder Wasser, aus dem Reaktionsgemisch entfernt werden. Die Zugabe von Inertgas und das gleichzeitige Entfernen der leichter flüchtigen Komponenten kann insbesondere bei Anfahren/Starten der Reaktion von Vorteil sein, da beim Anfahren durch die Zugabe der Reaktanden oder durch Nebenreaktionen inhibierende Verbindungen in das Reaktionsgemisch gelangen können.

Das erfindungsgemäße Verfahren kann diskontinuierlich oder kontinuierlich durchgeführt werden.

Mit dem erfindungsgemäßen Verfahren können Polyether der Formel (I) hergestellt werden. Insbesondere können mit dem erfindungsgemäßen Verfahren Polyether der Formel (I) hergestellt werden, die sich dadurch auszeichnen, dass sie hinsichtlich Strukturaufbau der Alkylenoxid-Einheiten und Molmassenverteilung gezielt und reproduzierbar hergestellt werden können. Diese Polyether eignen sich besonders gut zur Herstellung von organomodifizierten Siloxanverbindungen.

Die vorliegende Erfindung wird durch Fig. 1 näher erläutert, ohne dass die Erfindung auf die dort dargestellte Ausführungsform beschränkt sein soll.

In Fig. 1 ist schematisch eine Ausführungsform eines Schlaufenreaktors wie er in der vorliegenden Erfindung eingesetzt werden kann, dargestellt. Bei dieser Ausführungsform wird das Reaktionsgemisch (1) mit einer Umwälzpumpe (2) ggf. über einen Wärmetauscher (3) durch eine Strahlsauger-Mischdüse (4) zurück in den Reaktor gefördert. Im Gasraum (7) der Strahlsauger-Mischdüse (4) wird durch den Venturi-Effekt ein Unterdruck erzeugt, mit dem entweder gasförmige oder flüssige Edukte (5a und 5b) oder die Gasphase des Reaktors selbst (6) angesaugt und intensiv mit dem umgewälzten Reaktionsgemisch vermischt werden. Zur Steuerung der Reaktion oder zum Strippen kann dem Gasraum (7) auch ein Inertgas (8), wie z. B. Stickstoff zugegeben werden. Über eine Vakuumanlage (9) können flüchtigere Komponenten als der hergestellte und/oder vorgelegte Polyether aus dem Reaktionsgemisch entfernt werden.

## Patentansprüche

1. Verfahren zur Herstellung von Alkoxylierungsprodukten der Formel (I)
R¹-(CHR²CHR³-O)ₙ-H (I)
mit
n = 1 bis 12.000,
R¹ = ein mindestens ein Kohlenstoffatom aufweisender Rest und
R² und R³ unabhängig voneinander H oder ein Kohlenwasserstoffrest, wobei die mit dem Index n **gekennzeichnet**en Einheiten gleich oder unterschiedlich sein können, durch Alkoxylierung einer Startverbindung, die den Rest R¹ aufweist, in Gegenwart eines Doppel-Metall-Cyanid-Katalysators (DMC-Katalysators) in einem Schlaufenreaktor, **dadurch gekennzeichnet, dass** die Alkoxylierung in einem Schlaufenreaktor durchgeführt wird, der über eine Strahlsauger-Mischdüse verfügt, in der dem umgewälzten Reaktionsgemisch alle an der Reaktion beteiligten Stoffe und gegebenenfalls Hilfsstoffe zugemischt werden, wobei ein Alkylenoxid oder mehrere unterschiedliche Alkylenoxide zum gleichen Zeitpunkt (statistische Anlagerung) oder zu unterschiedlichen Zeitpunkten (Blockanlagerung) über die Strahlsauger-Mischdüse dem Reaktionsgemisch zudosiert werden und in einer ersten Phase die Zugabe von Startverbindung und zumindest einem Alkylenoxid zeitgleich erfolgt und dieser Phase eine Phase der Zugabe eines oder mehrerer Alkylenoxide folgt, in der keine Startverbindung zugegeben wird oder dass die zugabe von Startverbindung und zumindest einem Alkylenoxid ausschließlich zeitgleich erfolgt.

2. Verfahren nach Anspruch 1, **dadurch gekennzeichnet, dass** als Alkoxylierungsprodukte der Formel (I) Alkoxylierungsprodukte der Formel (II) 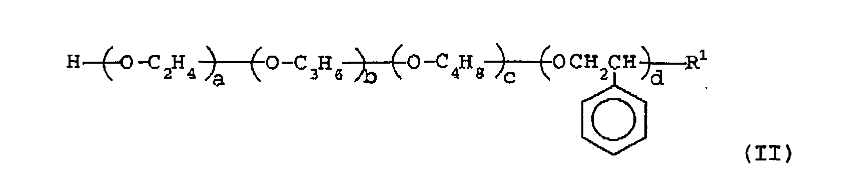 mit
a 0 bis 300,
b 0 bis 300,
c 0 bis 300,
d 0 bis 300,
R¹ ein mindestens ein Kohlenstoffatom aufweisender Rest und mit der Maßgabe dass zumindest einer der Indizes a bis d ungleich null ist, hergestellt werden.

3. Verfahren nach Anspruch 1 oder 2, **dadurch gekennzeichnet, dass** es diskontinuierlich durchgeführt wird.

4. Verfahren nach Anspruch 1 oder 2, **dadurch gekennzeichnet, dass** es kontinuierlich durchgeführt wird.

5. Verfahren nach einem der Ansprüche 1 bis 4, **dadurch gekennzeichnet, dass** über die Strahlsauger-Mischdüse ein Inertgas dem Reaktionsgemisch zugeführt wird und in einer im Schlaufenreaktor integrierten Vakuumanlage leichter flüchtige Komponenten als das Alkoxylierungsprodukt durch Anlegen eines Unterdrucks aus dem Reaktionsgemisch entfernt werden.

6. Verfahren nach zumindest einem der Ansprüche 1 bis 5, **dadurch gekennzeichnet, dass** in der Startphase ein Alkoxylierungsprodukt und der DMC-Katalysator als Reaktionsgemisch vorgelegt werden und anschließend zeitgleich die Startverbindung und zumindest ein Alkylenoxid dem Reaktionsgemisch zudosiert werden.

7. Verfahren nach zumindest einem der Ansprüche 1 bis 6, **dadurch gekennzeichnet, dass** die Startverbindung ausgewählt ist aus der Gruppe der Alkohole, Carbonsäuren, Aldehyde und Ketone.

8. Verfahren nach Anspruch 7, **dadurch gekennzeichnet, dass** als Startverbindung ein ein- oder mehrwertiger Alkohol eingesetzt wird.

## Claims

1. Process for preparing alkoxylation products of the formula (I)
R¹-(CHR²CHR³-O)ₙ-H (I)
where
n = 1 to 12 000,
R¹ - a radical comprising at least one carbon atom and
R² and R³ are each independently H or a hydrocarbon radical, where the units designated with the index n may be the same or different, by alkoxylating a starter compound which comprises the R¹ radical in the presence of a double metal cyanide catalyst (DMC catalyst) in a loop reactor, **characterized in that** the alkoxylation is performed in a loop reactor which has an ejector mixing nozzle, in which all substances involved in the reaction and any assistants are added to the circulated reaction mixture, an alkylene oxide or a plurality of different alkylene oxides being metered into the reaction mixture via the ejector mixing nozzle at the same time (random addition) or at different times (block addition) and starter compound and at least one alkylene oxide are added simultaneously in a first phase and this phase is followed by a phase of addition of one or more alkylene oxides in which no starter compound is added, or starter compound and at least one alkylene oxide are added exclusively simultaneously.

2. Process according to Claim 1, **characterized in that** the alkoxylation products of the formula (I) prepared are alkoxylation products of the formula (II) 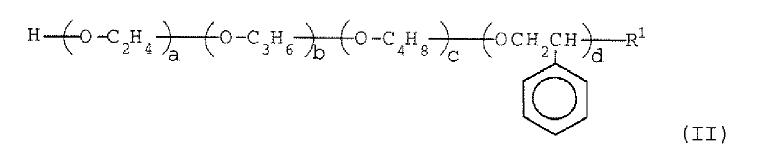 where
a is 0 to 300,
b is 0 to 300,
c is 0 to 300,
d is 0 to 300,
R¹ is a radical comprising at least one carbon atom
and
with the proviso that at least one of the indices a to d is unequal to zero.

3. Process according to Claim 1 or 2, **characterized in that** it is performed batchwise.

4. Process according to Claim 1 or 2, **characterized in that** it is performed continuously.

5. Process according to any one of Claims 1 to 4, **characterized in that** an inert gas is supplied to the reaction mixture via the ejector mixing nozzle and, in a vacuum system integrated in the loop reactor, components more volatile than the alkoxylation product are removed from the reaction mixture by applying a reduced pressure.

6. Process according to at least one of Claims 1 to 5, **characterized in that** an alkoxylation product and a DMC catalyst are initially charged as the reaction mixture in the start phase and then, simultaneously, the starter compound and at least one alkylene oxide are metered into the reaction mixture.

7. Process according to at least one of Claims 1 to 6, **characterized in that** the starter compound is selected from the group of the alcohols, carboxylic acids, aldehydes and ketones.

8. Process according to Claim 7, **characterized in that** the starter compound used is a mono- or polyhydric alcohol.

## Revendications

1. Procédé pour la préparation de produits d'alcoxylation de formule (I)
R¹-(CHR²CHR³-O)ₙ-H (I)
où
n = 1 à 12 000,
R¹ représente un radical comportant au moins un atome de carbone et
R² et R³ représentent, indépendamment l'un de l'autre, H ou un radical hydrocarboné, les unités **caractérisées par** l'indice n pouvant être identiques ou différentes, par alcoxylation d'un composé de départ qui comporte le radical R¹, en présence d'un catalyseur de type cyanure bimétallique (catalyseur DMC) dans un réacteur à boucle, **caractérisé en ce que** l'alcoxylation est effectuée dans un réacteur à boucle qui est doté d'une buse de mélange-injection dans laquelle toutes les substances participant à la réaction et éventuellement des adjuvants sont incorporés au mélange réactionnel mis en circuit, un oxyde d'alkylène ou plusieurs oxydes d'alkylène différents étant ajoutés par addition dosée au même moment (fixation par addition statistique) ou à des moments différents (fixation par addition séquencée) au mélange réactionnel par la buse de mélange-injection et dans une première phase l'addition du composé de départ et d'au moins un oxyde d'alkylène s'effectuant simultanément et à cette phase faisant suite une phase de l'addition d'un ou plusieurs oxydes d'alkylène, dans laquelle aucun composé de départ n'est ajouté ou **en ce que** l'addition du composé de départ et d'au moins un oxyde d'alkylène s'effectue exclusivement simultanément.

2. Procédé selon la revendication 1, **caractérisé en ce qu'**on prépare comme produits d'alcoxylation de formule (I) des produits d'alcoxylation de formule (II) 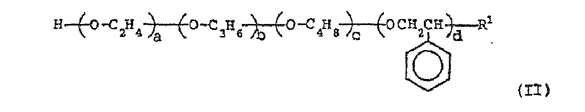 où
a vaut de 0 à 300,
b vaut de 0 à 300,
c vaut de 0 à 300,
d vaut de 0 à 300,
R¹ représente un radical comportant au moins un atome de carbone et étant entendu qu'au moins l'un des indice a à d est différent de zéro.

3. Procédé selon la revendication 1 ou 2,
**caractérisé en ce qu'**il est effectué en mode discontinu.

4. Procédé selon la revendication 1 ou 2,
**caractérisé en ce qu'**il est effectué en continu.

5. Procédé selon l'une quelconque des revendications 1 à 4, **caractérisé en ce qu'**on envoie un gaz inerte au mélange réactionnel par la buse de mélange-injection et, dans l'unité sous vide intégrée dans le réacteur à boucle, des composants aisément volatils sont séparés du mélange réactionnel, en tant que produit d'alcoxylation, par application d'une dépression.

6. Procédé selon au moins l'une des revendications 1 à 5, **caractérisé en ce que** dans la phase initiale on dispose au préalable en tant que mélange réactionnel un produit d'alcoxylation et le catalyseur DMC et ensuite on ajoute simultanément par addition dosée au mélange réactionnel le composé de départ et au moins un oxyde d'alkylène.

7. Procédé selon au moins l'une des revendications 1 à 6, **caractérisé en ce que** le composé de départ est choisi dans le groupe des alcools, acides carboxyliques, aldéhydes et cétones.

8. Procédé selon la revendication 7, **caractérisé en ce qu'**on utilise comme composé de départ un alcool dihydrique ou polyhydrique.
